# EUROPÄISCHE PATENTANMELDUNG

(11) **EP 1 464 928 A2**
(43) Veröffentlichungstag der Anmeldung: **06.10.2004**
(21) Anmeldenummer: 04006478.4
(22) Anmeldetag: 18.03.2004
(51) Int. Cl.: G01F 1/36

(54) **Durchfluss-Messvorrichtung**

(30) Priorität: 01.04.2003 DE 20305230 U
(71) Anmelder: Festo AG & Co, 73734 Esslingen (DE)
(72) Erfinder: Nestle, Volker, 73734 Esslingen (DE); Schulz, Winfried, 73765 Neuhausen (DE)
(74) Vertreter: Abel, Martin

(57) **Zusammenfassung**

Es wird eine Durchfluss-Messvorrichtung vorgeschlagen, mit einem Gehäuse (2), in dem ein Haupt-Strömungskanal (6) verläuft, in dem sich einen Druckabfall des hindurchströmenden Druckmediums hervorrufende Druckabfall-Erzeugungsmittel (16) befinden und an dessen Kanalwandung (21) die Abgriffsmündungen mehrerer mit einer in oder an dem Gehäuse (2) angeordneten Durchfluss-Erfassungseinrichtung (14) verbundener Abgriffskanäle (18) vorgesehen sind. Der Haupt-Strömungskanal (6) ist einschließlich den Druckabfall-Erzeugungsmitteln (16) und den Abgriffsmündungen Bestandteil eines koaxial in eine Aufnahme (3) des Gehäuses (2) eingesetzten hülsenartigen Kanaleinsatzes (4). Die Innenfläche der Aufnahme (3) und die Außenfläche des Kanaleinsatzes (4) sind so als Schnittstellen ausgebildet, dass sich bei der Montage des Kanaleinsatzes (4) eine zuordnungsrichtige fluidische Verknüpfung gehäuseseitiger und einsatzseitiger Kanalabschnitte (24, 23) der Abgriffskanäle (18) ergibt.

## Beschreibung

Die Erfindung betrifft eine Durchfluss-Messvorrichtung, mit einem Gehäuse, in dem ein Haupt-Strömungskanal verläuft, in dem sich einen Druckabfall des hindurchströmenden Druckmediums hervorrufende Druckabfall-Erzeugungsmittel befinden und an dessen Kanalwandung die Abgriffsmündungen mehrerer mit einer in oder an dem Gehäuse angeordneten Durchfluss-Erfassungseinrichtung verbundener Abgriffskanäle vorgesehen sind.

Eine aus dem deutschen Gebrauchsmuster 202 08 716 bekannte Durchfluss-Messvorrichtung dieser Art enthält ein rohrförmiges Gehäuse, in dem ein Haupt-Strömungskanal ausgebildet ist, in dessen Verlauf ein Laminar-Flow-Element eingeschaltet ist, das eine Vielzahl von Kapillarkanälen enthält, bei deren Durchströmen ein Druckabfall auftritt. Zwei mit Abstand zueinander vor und nach dem Laminar-Flow-Element einmündende Abgriffskanäle stehen mit einer an dem Gehäuse angesetzten Durchfluss-Erfassungseinrichtung in Verbindung und bilden einen Messkanal, in dem sich infolge der Druckdifferenz eine By-pass-Strömung ausbildet, deren Durchfluss mittels einer Massenstrom-Sensoreinrichtung der Durchfluss-Erfassungseinrichtung erfasst werden kann. Auf Basis der Messwerte lässt sich die Durchflussrate im Haupt-Strömungskanal ermitteln.

Auch bei einer in dem deutschen Gebrauchsmuster 201 00 874 beschriebenen Durchfluss-Messvorrichtung wird die Durchflussrate eines unmittelbar in einem Gehäuse ausgebildeten Haupt-Strömungskanals ermittelt. Zur Bildung der Druckabfall-Erzeugungsmittel ist der Haupt-Strömungskanal hier allerdings mit sich in der Strömungsrichtung des Druckmediums verringerndem Strömungsquerschnitt ausgeführt, sodass sich die Gestalt einer sich konisch verengenden Düse ergibt. Zur Bestimmung der Durchflussrate wird die Druckdifferenz zwischen Kanalbereichen unterschiedlichen Strömungsquerschnittes erfasst, die ein Maß für die Strömungsgeschwindigkeit ist. Auf diese Weise wird die Durchflussmessung auf eine Druckmessung zurückgeführt.

Allen bekannten Ausführungsformen ist gemeinsam, dass entsprechend den Messbedürfnissen des Anwenders jeweils spezifisch angepasste Durchfluss-Messvorrichtungen bereitgestellt werden müssen. Ändern sich beispielsweise die zu messenden Strömungsraten, müssen Durchfluss-Messvorrichtungen mit entsprechend unterschiedlichem Messbereich eingesetzt werden. Die damit verbundenen Kosten sind relativ hoch.

Es ist die Aufgabe der vorliegenden Erfindung, Maßnahmen vorzuschlagen, die mit geringerem Aufwand eine Anpassung an unterschiedliche Messgegebenheiten zulassen.

Zur Lösung dieser Aufgabe ist vorgesehen, dass der Haupt-Strömungskanal einschließlich den Druckabfall-Erzeugungsmitteln und den Abgriffsmündungen Bestandteil eines koaxial in eine Aufnahme des Gehäuses eingesetzten hülsenartigen Kanaleinsatzes ist, wobei sich die Abgriffskanäle aus im Gehäuse verlaufenden, zur Innenfläche der Aufnahme ausmündenden gehäuseseitigen Kanalabschnitten und aus in der Wandung des Kanaleinsatzes verlaufenden, zur Außenfläche des Kanaleinsatzes ausmündenden einsatzseitigen Kanalabschnitten zusammensetzen, wobei die Innenfläche der Aufnahme und die Außenfläche des Kanaleinsatzes als eine zuordnungsrichtige fluidische Verknüpfung der gehäuseseitigen und der einsatzseitigen Kanalabschnitte bewirkende Schnittstellen ausgebildet sind.

Auf diese Weise kann unterschiedlichen Messbedürfnissen der Anwender dadurch Rechnung getragen werden, dass in das vorhandene Gehäuse der Durchfluss-Messvorrichtung wahlweise ein Kanaleinsatz eingebaut wird, der die gewünschte Spezifikation aufweist. Das Gehäuse selbst und oft auch die Durchfluss-Erfassungseinrichtung können in der Regel unabhängig vom momentan verwendeten Kanaleinsatz beibehalten werden, sodass sich eine beträchtliche Kosteneinsparung ergibt. Die zwischen dem Haupt-Strömungskanal und der Durchfluss-Erfassungseinrichtung verlaufenden Abgriffskanäle sind in gehäuseseitige und in einsatzseitige Kanalabschnitte unterteilt, wobei durch entsprechend gestaltete Schnittstellen an den einander zugewandten Innen- und Außenflächen der Aufnahme und des Kanaleinsatzes eine zuordnungsrichtige fluidische Verknüpfung unabhängig vom momentan verwendeten Kanaleinsatz gewährleistet ist. Die bezüglich des Gehäuses separate Ausgestaltung des Kanaleinsatzes erleichtert auch die Fertigung der oft kompliziert gestalteten Maßnahmen zur Erzeugung des gewünschten Druckabfalls.

Vorteilhafte Weiterbildungen der Erfindung gehen aus den Unteransprüchen hervor.

Es ist besonders zweckmäßig, den Kanaleinsatz als Einsteckteil auszubilden, das durch einen einfachen axialen Steckvorgang in der Aufnahme des Gehäuses montierbar ist. Zur Fixierung eignen sich vor allem werkzeuglos handhabbare und bei Bedarf auch wieder lösbare Rastmittel.

Sofern durch die Ausgestaltung der Schnittstellen erforderlich, können am Gehäuse und am Kanaleinsatz geeignete Positioniermittel vorgesehen sein, die eine bestimmte Drehwinkelposition des Kanaleinsatzes mit Bezug zu der Aufnahme des Gehäuses vorgeben und dadurch eine verwechslungssichere Installation begünstigen.

Eine sehr hohe Messgenauigkeit, verbunden mit einer relativ geringen Abhängigkeit von der Art der Anströmung durch das Druckmedium, lässt sich erzielen, wenn der betreffende Abgriffskanal mittels mehrerer auf gleicher axialer Höhe in Umfangsrichtung über den Kanalumfang verteilter Abgriffsmündungen in den Haupt-Strömungskanal einmündet, die gemeinsam mit einer am Außenumfang des Kanaleinsatzes ausgebildeten Ringnut kommunizieren. Die erfassten Drucksignale werden somit ausgemittelt, sodass Störungen des Strömungsprofils in den Abgriffsquerschnitten, die aus Art und Richtung der Anströmung resultieren, minimiert werden.

Eine besonders vorteilhafte Weiterbildung der Erfindung sieht vor, dass ein und derselbe Kanaleinsatz wahlweise in einer von zwei einander entgegengesetzten Längsausrichtungen in die Aufnahme einsetzbar ist, um bei beiden Strömungsrichtungen des Druckmediums ohne Vornahme sonstiger Änderungen an der Durchfluss-Messvorrichtung eine Durchflussmessung zu ermöglichen. Da das Gehäuse der Durchfluss-Messvorrichtung in der Regel auf ganz bestimmte Orientierungen während des Einsatzes beschränkt ist - beispielsweise aufgrund an einer bestimmten Seite angeordneter Einstell- und/oder Anzeigemittel -, war bisher zur Durchflussmessung entgegengesetzt gerichteter Strömungen regelmäßig ein Gesamtaustausch der Durchfluss-Messvorrichtung notwendig. Nunmehr genügt es, den Kanaleinsatz umzudrehen und mit um 180° entgegengesetzter Orientierung in der Aufnahme des Gehäuses zu installieren. Nachfolgend wird die Erfindung anhand der beiliegenden Zeichnung näher erläutert. In dieser zeigen:
- Fig. 1: eine erste mögliche Bauform der Durchfluss-Messvorrichtung in einem Längsschnitt in vereinfachter Darstellung,
- Fig. 2: den bei der Durchfluss-Messvorrichtung gemäß Fig. 1 verwendeten Kanaleinsatz in Einzeldarstellung im Halbschnitt,
- Fig. 3: die Durchfluss-Messvorrichtung aus Fig. 1, wobei der Kanaleinsatz mit einer bezüglich der Fig. 1 entgegengesetzten Längsausrichtung installiert ist,
- Fig. 4: eine weitere mögliche Bauform der Durchfluss-Messvorrichtung in einer perspektivischen Explosionsdarstellung, wobei ein und derselbe Kanaleinsatz zweimal abgebildet ist, um die Installationsmöglichkeiten von entgegengesetzten Seiten her zu verdeutlichen,
- Fig. 5: die zusammengebaute Durchfluss-Messvorrichtung aus Fig. 4 im Längsschnitt und
- Fig. 6: die Anordnung aus Fig. 5 in einer Draufsicht gemäß Pfeil VI vor dem Einsetzen des Kanaleinsatzes und bei entfernter Durchfluss-Erfassungseinrichtung.

Die in der Zeichnung allgemein mit Bezugsziffer 1 bezeichneten Durchfluss-Messvorrichtungen besitzen jeweils ein Gehäuse 2, das insbesondere blockähnlich gestaltet sein kann und das von einer bevorzugt kreiszylindrisch konturierten Aufnahme 3 durchsetzt ist. In die Aufnahme 3 ist ein als Kanaleinsatz 4 bezeichnetes, außen komplementär zu der Aufnahme 3 gestaltetes hülsenartiges Bauteil eingesetzt. Dieses definiert einen das Gehäuse 2 in einer Längsrichtung 5 durchsetzenden Haupt-Strömungskanal 6.

Der Haupt-Strömungskanal 6 besitzt einenends einen Einlass 7 und andernends einen Auslass 8. An dem Einlass 7 kann Druckmedium in den Haupt-Strömungskanal 6 eingespeist werden, das nach dem Hindurchströmen durch den Haupt-Strömungskanal 6 an dem Auslass 8 wieder austritt. Die Strömungsrichtung durch den Haupt-Strömungskanal 6 hindurch ist durch einen Pfeil bei 12 angedeutet.

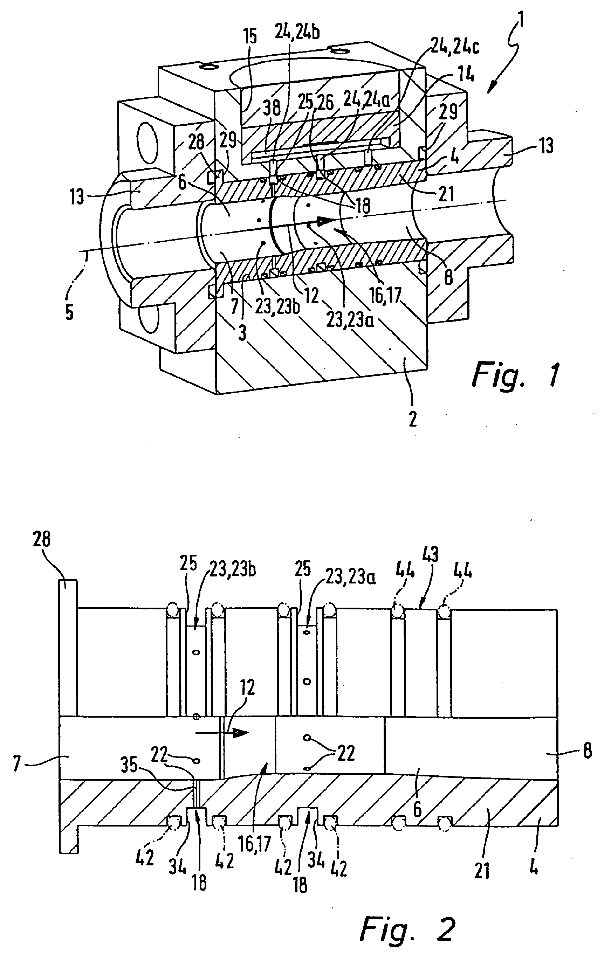

Bei dem Ausführungsbeispiel der Fig. 1 bis 3 sind an das Gehäuse 2 in beiderseitiger Verlängerung des Kanaleinsatzes 4 zwei Anschlusskörper 13 angesetzt, die den Anschluss nicht näher dargestellter Fluidleitungen für die Zufuhr und die Abfuhr des Druckmediums ermöglichen. Das Druckmedium kann hydraulischer oder gasförmiger Art sein. Beim Ausführungsbeispiel ist Druckluft vorgesehen.

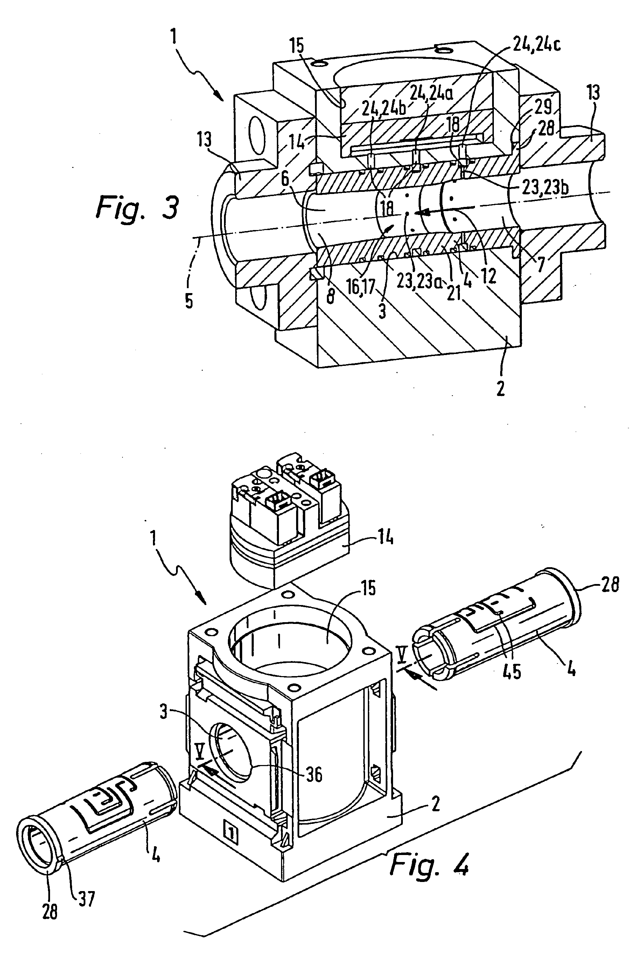

Bei dem Ausführungsbeispiel der Fig. 4 bis 6 fehlen gesonderte Anschlusskörper 13. Hier ist vorgesehen, dass an das Gehäuse 2, in beiderseitiger Verlängerung des Kanaleinsatzes 4, zur Druckluftaufbereitung dienende Geräte angesetzt werden, durch die hindurch die Zufuhr und Abfuhr des Druckmediums stattfindet. Diese Geräte, in der Regel als Wartungsgeräte bezeichnet, dienen beispielsweise zur Druckregelung oder zum Filtern der Druckluft.

Somit wird deutlich, dass die Durchfluss-Messvorrichtung sowohl ein eigenständiges Gerät sein kann als auch als Bestandteil eines beliebigen fluidtechnischen Gerätes ausgeführt sein kann, beispielsweise eines zur Druckluftaufbereitung dienenden Wartungsgerätes, innerhalb dessen sie zur Durchflusserfassung eingesetzt wird.

Im Bereich des Umfanges der Aufnahme 3 ist das Gehäuse 2 mit einer Vertiefung 15 ausgestattet, in die eine Durchfluss-Erfassungseinrichtung 14 eingesetzt ist. Auf diese Weise ist die Durchfluss-Erfassungseinrichtung 14 komplett versenkt in das Gehäuse 2 eingebaut. Alternativ könnte die Durchfluss-Erfassungseinrichtung 14 auch außen an das Gehäuse 2 angebaut sein.

Im Innern des Haupt-Strömungskanals 6 befinden sich Druckabfall-Erzeugungsmittel 16. Sie bewirken einen Druckabfall des durch sie hindurchströmenden Druckmediums, sodass vor den Druckabfall-Erzeugungsmitteln 16 ein höherer statischer Druck herrscht als danach.

Die Druckabfall-Erzeugungsmittel 16 könnten beispielsweise von einem sogenannten Laminar-Flow-Element gebildet sein. Bei den Ausführungsbeispielen sind sie durch einen sich in der Strömungsrichtung 12 verringernden Querschnitt des Haupt-Strömungskanals 6 definiert. Dieser Kanalabschnitt sei im Folgenden als Düsenabschnitt 17 bezeichnet. Er kann die Gestalt einer Venturi-Düse haben.

Im Bereich des Düsenabschnittes 17 münden mehrere Abgriffskanäle 18 mit in der Strömungsrichtung 12 und somit in der Längsrichtung des Kanaleinsatzes 4 beabstandeten Abgriffsmündungen 22 ein. Sie durchsetzen jeweils die Wandung 21 des Kanaleinsatzes 4 und das Gehäuse 2, wobei sie zur Durchfluss-Erfassungseinrichtung 14 führen und diese somit mit den Abgriffsmündungen 22 verbinden.

Die Abgriffskanäle 18 setzen sich also teils aus einsatzseitigen Kanalabschnitten 23 und teils aus gehäuseseitigen Kanalabschnitten 24 zusammen, wobei sich die einsatzseitigen Kanalabschnitte 23 zwischen den Abgriffsmündungen 22 und an der Außenfläche des Kanaleinsatzes 4 angeordneten ersten Anschlussöffnungen 25 erstrecken und die gehäuseseitigen Kanalabschnitte 24 zwischen an der Innenfläche der Aufnahme 3 ausmündenden zweiten Anschlussöffnungen 26 und an die Durchfluss-Erfassungseinrichtung 14 angeschlossenen dritten Anschlussöffnungen 27. Bei den Ausführungsbeispielen liegen die dritten Anschlussöffnungen 27 am Grund der die Durchfluss-Erfassungseinrichtung 14 aufnehmenden Vertiefung 15.

Der Haupt-Strömungskanal 6 ist somit bei beiden Ausführungsbeispielen, einschließlich den Druckabfall-Erzeugungsmitteln 16 und den Abgriffsmündungen 22, Bestandteil des koaxial in die Aufnahme 3 eingesetzten Kanaleinsatzes 4, wobei die umfangsseitige Außenfläche des Kanaleinsatzes 4 und die dieser zugewandte Innenfläche der Aufnahme 3 durch entsprechende Verteilung der ersten und zweiten Anschlussöffnungen 25, 26 als Schnittstellen fungieren, die eine zuordnungsrichtige fluidische Verknüpfung zwischen den einsatzseitigen Kanalabschnitten 23 und den gehäuseseitigen Kanalabschnitten 24 bewirken.

Man hat somit die Möglichkeit, sofern es die momentanen Messbedürfnisse erfordern, in ein und dieselbe Aufnahme 3 alternativ unterschiedliche Kanaleinsätze 4 einzusetzen, die sich insbesondere in der Ausgestaltung der Druckabfall-Erzeugungsmittel unterscheiden, wobei durch eine entsprechende Ausgestaltung der am Kanaleinsatz 4 vorgesehenen Schnittstelle jederzeit eine Verknüpfung mit der unveränderten Schnittstelle des Gehäuses 2 in einer Weise möglich ist, dass eine Durchflusserfassung ohne Austausch der Durchfluss-Erfassungseinrichtung 14 durchgeführt werden kann.

Bei beiden Ausführungsbeispielen ist der Kanaleinsatz 4 als Einsteckteil ausgebildet. Er enthält am rückwärtigen Endabschnitt einen umlaufenden, radial abstehenden Anschlagbund 28 und wird bei der Montage von einer Stirnseite der Aufnahme 3 her so weit koaxial in die Aufnahme 3 eingesteckt, bis er mit diesem Anschlagbund 28 an einer gehäusefesten Abstufung 29 zur Anlage gelangt. Durch diese Anschlagmittel 28, 29, die auch auf andere Weise realisiert werden könnten, kann die Einsetztiefe des Kanaleinsatzes 4 mit Bezug zur Aufnahme 3 exakt vorgegeben werden, sodass die von den ersten und zweiten Anschlussöffnungen 25, 26 gebildeten Schnittstellen exakt zueinander passen.

Die axiale Fixierung des eingesteckten Kanaleinsatzes 4 mit Bezug zum Gehäuse 2 geschieht beim Ausführungsbeispiel der Fig. 1 bis 3 durch die an das Gehäuse 2 in teilweiser radialer Überlappung der Stirnfläche des Kanaleinsatzes 4 angesetzten Anschlusskörper 13. Wird der im Bereich des Anschlagbundes 28 montierte Anschlusskörper 13 entfernt, lässt sich der Kanaleinsatz 4 ohne weiteres aus der Aufnahme 3 herausziehen und beispielsweise durch einen Kanaleinsatz 4 mit anderer Spezifikation ersetzen.

Zur Individualisierung unterschiedlicher Kanaleinsätze 4 und damit zur Vermeidung von Verwechslungen können die unterschiedlich ausgelegten Kanaleinsätze 4 durch Farbcodierungen oder sonstige Unterscheidungsmittel leicht unterscheidbar gemacht werden.

Dies trifft im Übrigen auch für den Kanaleinsatz 4 gemäß Fig. 4 bis 6 zu, der sich von der eben beschriebenen Bauform unter anderem dadurch unterscheidet, dass er in der Aufnahme 3 durch Verrastung lösbar fixiert werden kann.

Bevorzugt ist der Kanaleinsatz 4 an seinem vorderen Endabschnitt mehrfach längsgeschlitzt, sodass sich über den Umfang verteilt mehrere radial federelastische Rastarme 32 ergeben, die im eingesteckten Zustand des Kanaleinsatzes 4 eine bevorzugt ringförmige Gehäusestufe 33 hintergreifen. Die Rastarme 32 sind dabei in die Raststellung vorgespannt und können zum Entnehmen des Kanaleinsatzes 4 vorübergehend nach radial innen umgebogen werden.

Eine andere Ausgestaltung von Rastmitteln 32, 33 zur lösbar verrastenden Fixierung des Kanaleinsatzes 4 wäre ebenfalls möglich.

Bei dem Kanaleinsatz 4 gemäß Fig. 1 bis 3 sind die ersten Anschlussöffnungen 25 von in Längsrichtung beabstandeten Ringnuten 34 gebildet, die in den Außenumfang des Kanaleinsatzes 4 eingebracht sind und sich konzentrisch um diesen herum erstrecken. Diese Ausgestaltung hat den Vorteil, dass der Kanaleinsatz 4 mit beliebiger Drehwinkelposition in die Aufnahme 3 einsetzbar ist. Die Verbindung zur zugeordneten, fluchtenden zweiten Anschlussöffnung 26 ist jederzeit gewährleistet.

Speziell bei einer solchen Bauform besteht auch die aus Fig. 2 hervorgehende vorteilhafte Möglichkeit, ein und denselben Abgriffskanal gleichzeitig mit mehreren Abgriffsmündungen 22 zu versehen, die von Kanalabschnitten 35 gebildet sind, welche um den Haupt-Strömungskanal 6 herum verteilt sind und jeweils einenends in den Haupt-Strömungskanal 6 und andernends in die zugeordnete Ringnut 34 einmünden. Die abgegriffenen Drucksignale werden somit ausgemittelt und folglich die Messungenauigkeiten verringert. Verbunden damit ist eine Signalstabilisierung, was den Einsatz der Durchfluss-Messvorrichtung vereinfacht und die Einsatzbereiche erweitert.

Beim Ausführungsbeispiel der Fig. 4 bis 6 ist eine bestimmte Drehwinkellage des Kanaleinsatzes 4 in der Aufnahme 3 erforderlich. Daher sind am Gehäuse 2 und am Kanaleinsatz 4 erste und zweite Positioniermittel 36, 37 vorgesehen, die ein vollständiges Einstecken des Kanaleinsatzes 4 nur bei einer ganz bestimmten Drehwinkelausrichtung zulassen und somit die gewünschte Drehwinkelposition des Kanaleinsatzes 4 bezüglich des Gehäuses 2 bzw. der Aufnahme 3 vorgeben. Beim Ausführungsbeispiel sind die zweiten Positioniermittel 37 von einer am Außenumfang des Anschlagbundes 28 angeformten Nase gebildet, die in eine die ersten Positioniermittel 36 bildende gehäuseseitige Vertiefung 15 formschlüssig eingreifen kann.

Bei dem Ausführungsbeispiel der Fig. 1 bis 3 enthält die Durchfluss-Erfassungseinrichtung 14 eine auf kalorimetrischem Funktionsprinzip basierende, nicht näher dargestellte Massenstrom-Sensoreinrichtung. Diese ist in den Verlauf eines Bypass-Kanals 38 eingeschaltet, der zwei Abgriffskanäle 18 miteinander verbindet und eine By-pass-Strömung des Druckmediums unter Umgehung der Druckabfall-Erzeugungsmittel 16 gestattet, jedoch selbst einen genau definierten Druckabfall erzeugt. Die Massenstrom-Sensoreinrichtung ermittelt den durch den im Vergleich zum Haupt-Strömungskanal einen relativ kleinen Durchmesser aufweisenden By-pass-Kanal strömenden Massenstrom, der in einer Auswerteeinrichtung der Durchfluss-Erfassungseinrichtung 14 zur Strömung im Haupt-Strömungskanal 6 korreliert wird.

Beim Ausführungsbeispiel der Fig. 4 bis 6 kommt eine Durchfluss-Erfassungseinrichtung 14 zum Einsatz, die nach dem sogenannten Wirkdruckprinzip arbeitet. In diesem Fall wird über wenigstens zwei Abgriffskanäle 18 der im Bereich der Abgriffsmündungen 22 herrschende statische Druck abgegriffen, um in einer Differenzdruck-Sensoreinrichtung der Durchfluss-Erfassungseinrichtung 14 den Differenzdruck zu ermitteln. Mit Hilfe weiterer Zustandsgrößen wie Absolutdruck, Temperatur und Feuchtigkeit, die ebenfalls über Abgriffskanäle 18 aus dem Haupt-Strömungskanal 6 abgegriffen werden können, wird dann der momentane Durchfluss errechnet.

Während beim Ausführungsbeispiel der Fig. 1 bis 3 lediglich zwei Abgriffskanäle 18 vorhanden sind, verfügt der Kanaleinsatz 4 gemäß Fig. 4 bis 6 über drei Abgriffskanäle 18, was insbesondere auch einen Zwischenabgriff bei Überschreiten des Messbereichs zulässt, wie dies in dem deutschen Gebrauchsmuster 201 00 874 exemplarisch näher beschrieben ist.

Ein weiterer, besonderer Vorteil beider Ausführungsbeispiele besteht darin, dass ein und derselbe Kanaleinsatz 4 wahlweise mit einer von zwei einander entgegengesetzten Längsausrichtungen in die Aufnahme 3 einsetzbar ist, um bei beiden Strömungsrichtungen des Druckmediums eine Durchflussmessung zu ermöglichen.

In diesem Zusammenhang verlaufen in der Wandung 21 des Kanaleinsatzes 4 bei der Ausführungsform der Fig. 1 bis 3 zwei einsatzseitige Kanalabschnitte 23 der Abgriffskanäle 18, die an axial beabstandeten Stellen in den Haupt-Strömungskanal 6 einmünden und die jeweils mit einer der beiden schon erwähnten Ringnuten 34 am Außenumfang des Kanaleinsatzes 4 kommunizieren. In der Wandung des Gehäuses 2 hingegen verlaufen drei gehäuseseitige Kanalabschnitte 24 der Abgriffskanäle 18, die jeweils zum einen mit der Durchfluss-Erfassungseinrichtung 14 kommunizieren und zum anderen an axial beabstandeten Stellen umfangsseitig in die Aufnahme 3 einmünden. Durch entsprechende Positionierung der von den Ringnuten 34 gebildeten ersten Anschlussöffnungen 25 und der zu den gehäuseseitigen Kanalabschnitten 24 gehörenden zweiten Anschlussöffnungen 26 wird nun erreicht, dass ein erster (23a) der einsatzseitigen Kanalabschnitte 23 unabhängig von der Längsausrichtung des Kanaleinsatzes 4 mit einem ersten (24a) gehäuseseitigen Kanalabschnitt kommuniziert, während der zweite einsatzseitige Kanalabschnitt 23b, je nach Längsausrichtung des Kanaleinsatzes 4, mit dem zweiten gehäuseseitigen Kanalabschnitt 24b (Fig. 1) oder mit dem dritten gehäuseseitigen Kanalabschnitt 24c (Fig. 3) kommuniziert.

Unabhängig von der Längsorientierung des Kanaleinsatzes 4 kann sich somit eine By-pass-Strömung in der gewünschten Richtung ausbilden, um ein exaktes Messergebnis zu erzielen.

Um im Bereich der beiden Schnittstellen, also zwischen dem Außenumfang des Kanaleinsatzes 4 und dem Innenumfang der Aufnahme 3, Fehlströmungen von Druckmedium zu verhindern, sind die beiden Ringnuten 34 jeweils axial beidseits von einem den Kanaleinsatz 4 konzentrisch umschließenden Dichtring 42 flankiert. Die Dichtringe 42 sitzen bevorzugt ebenfalls in in den Außenumfang des Kanaleinsatzes 4 eingebrachten Ringnuten.

Da sowohl der zweite als auch der dritte gehäuseseitige Kanalabschnitt 24b, 24c in den By-pass-Kanal 38 einmündet, muss verhindert werden, dass durch den momentan nicht wirksamen Kanalabschnitt Druckmedium austritt. Aus diesem Grunde befindet sich in demjenigen Bereich des Außenumfanges des Kanaleinsatzes 4, der - je nach Einsetzrichtung - der zweiten Anschlussöffnung 26 des zweiten oder dritten gehäuseseitigen Kanalabschnittes 24b, 24c gegenüberliegt, eine ringsum laufende Dichtzone 43, die vergleichbar den Ringnuten 34 axial beidseits von ringförmigen Dichtmitteln 44 flankiert ist. Das Druckmedium wird somit in der Dichtzone 43 zurückgehalten und ist am Ausströmen gehindert.

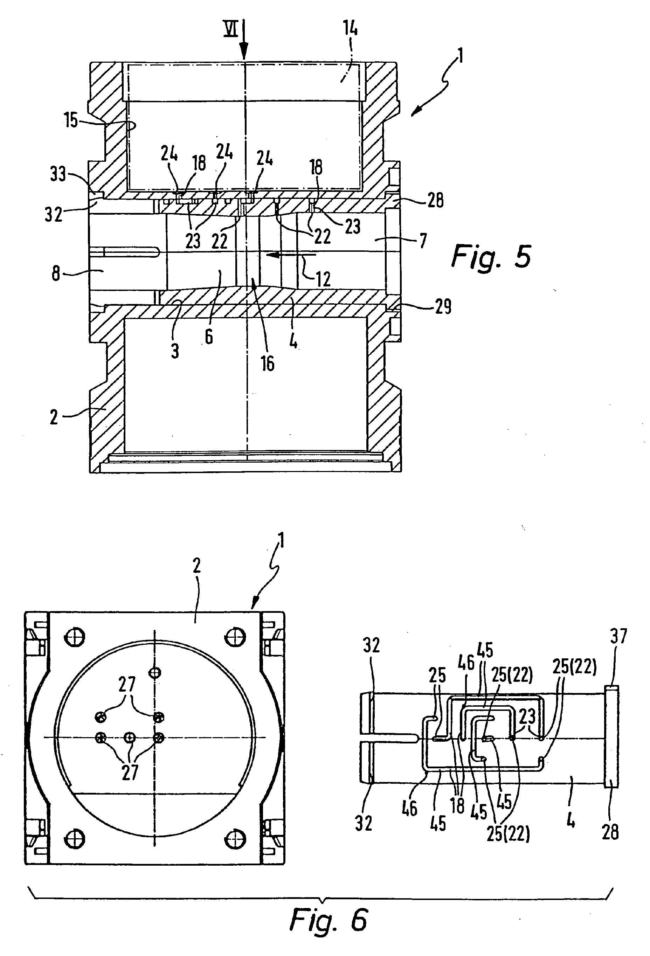

Beim Ausführungsbeispiel der Fig. 4 bis 6 sind insgesamt fünf Abgriffskanäle 18 vorgesehen. Deren im Haupt-Strömungskanal 6 liegende Abgriffsmündungen 22 sind in Fig. 6 in Klammern gesetzt, um zu verdeutlichen, dass sie in einer anderen als der abgebildeten Ebene liegen. Jede dieser Abgriffsmündungen 22 kommuniziert über den zugeordneten einsatzseitigen Kanalabschnitt 23 gleichzeitig mit zwei am Außenumfang des Kanaleinsatzes 4 vorgesehenen ersten Anschlussöffnungen 25, wobei die jeweiligen Paare erster Anschlussöffnungen 25 durch einen am Außenumfang des Kanaleinsatzes 4 ausgebildeten nutartigen Verbindungskanal 45 miteinander verbunden sind.

Beim Ausführungsbeispiel liegt jeweils eine erste Anschlussöffnung 25 der zugeordneten Abgriffsmündung 22 radial gegenüber, wobei ausgehend von dort über einen nutartigen Verbindungskanal 45 der Anschluss der jeweils anderen ersten Anschlussöffnung 25 stattfindet.

Die beiden einer jeweiligen Abgriffsmündung 22 zugeordneten ersten Anschlussöffnungen 25 sind nun derart verteilt am Außenumfang des Kanaleinsatzes 4 platziert, dass ein und derselbe gehäuseseitige Kanalabschnitt 24, entsprechend der momentanen Längsausrichtung des Kanaleinsatzes 4, entweder über die eine oder über die andere erste Anschlussöffnung 25 mit der zugeordneten Abgriffsmündung 22 kommuniziert.

Wie aus Fig. 4 und 6 ersichtlich ist, können die einzelnen Paare erster Anschlussöffnungen 25 problemlos auch über komplex strukturierte nutartige Verbindungskanäle 45 miteinander verbunden werden, weil sich diese Verbindungskanäle 45 am Außenumfang des Kanaleinsatzes 4 befinden und somit eine kostengünstige Formgebung beim Spritzgießen des bevorzugt aus Kunststoffmaterial bestehenden Kanaleinsatzes 4 möglich ist.

Zur gegenseitigen Abdichtung der Verbindungskanäle 45 ist jeder Verbindungskanal 45 beim Ausführungsbeispiel ringsum von einer Dichtung 46 umgeben, die an den Außenumfang des Kanaleinsatzes 4 fest angeformt sein kann.

Die Installation des Kanaleinsatzes 4 in um 180° verdrehter Längsorientierung geschieht zweckmäßigerweise dadurch, dass der Kanaleinsatz 4 wahlweise durch die eine oder durch die andere stirnseitige Öffnung der Aufnahme 3 hindurch in diese Aufnahme 3 eingesteckt wird.

## Patentansprüche

1. Durchfluss-Messvorrichtung, mit einem Gehäuse (2), in dem ein Haupt-Strömungskanal (6) verläuft, in dem sich einen Druckabfall des hindurchströmenden Druckmediums hervorrufende Druckabfall-Erzeugungsmittel (16) befinden und an dessen Kanalwandung (21) die Abgriffsmündungen (22) mehrerer mit einer in oder an dem Gehäuse (2) angeordneten Durchfluss-Erfassungseinrichtung (14) verbundener Abgriffskanäle (18) vorgesehen sind, **dadurch gekennzeichnet, dass** der Haupt-Strömungskanal (16) einschließlich den Druckabfall-Erzeugungsmitteln (16) und den Abgriffsmündungen (22) Bestandteil eines koaxial in eine Aufnahme (3) des Gehäuses (2) eingesetzten hülsenartigen Kanaleinsatzes (4) ist, wobei sich die Abgriffskanäle (18) aus im Gehäuse (2) verlaufenden, zur Innenfläche der Aufnahme (3) ausmündenden gehäuseseitigen Kanalabschnitten (24) und aus in der Wandung (21) des Kanaleinsatzes (4) verlaufenden, zur Außenfläche des Kanaleinsatzes (4) ausmündenden einsatzseitigen Kanalabschnitten (23) zusammensetzen, wobei die Innenfläche der Aufnahme (3) und die Außenfläche des Kanaleinsatzes (4) als eine zuordnungsrichtige fluidische Verknüpfung der gehäuseseitigen und der einsatzseitigen Kanalabschnitte (24, 23) bewirkende Schnittstellen ausgebildet sind.

2. Durchfluss-Messvorrichtung nach Anspruch 1, **dadurch gekennzeichnet, dass** der Kanaleinsatz (4) als Einsteckteil ausgebildet ist.

3. Durchfluss-Messvorrichtung nach Anspruch 1 oder 2, **gekennzeichnet durch** Rastmittel (32, 33) zur lösbaren verrastenden Fixierung des in die Aufnahme (3) eingesetzten Kanaleinsatzes (4) bezüglich des Gehäuses (2).

4. Durchfluss-Messvorrichtung nach Anspruch 3, **dadurch gekennzeichnet, dass** der Kanaleinsatz (4) an seinem vorderen Endabschnitt mehrfach längsgeschlitzt ist, wobei mehrere radial federelastische Rastarme (32) gebildet sind, die im montierten Zustand des Kanaleinsatzes (4) mit dem Gehäuse (2) in Rasteingriff stehen.

5. Durchfluss-Messvorrichtung nach einem der Ansprüche 1 bis 4, **gekennzeichnet durch** am Gehäuse (2) und am Kanaleinsatz (4) ausgebildete Positioniermittel (36, 37), die zur Vorgabe einer bestimmten Drehwinkelposition des Kanaleinsatzes (4) formschlüssig ineinandergreifen können.

6. Durchfluss-Messvorrichtung nach einem der Ansprüche 1 bis 5, **gekennzeichnet durch** am Gehäuse (2) und am Kanaleinsatz (4) vorgesehene Anschlagmittel (28, 29) zur Vorgabe der Einsetztiefe des Kanaleinsatzes (4).

7. Durchfluss-Messvorrichtung nach einem der Ansprüche 1 bis 6, **dadurch gekennzeichnet**, die Druckabfall-Erzeugungsmittel von einem Kanalabschnitt (17) mit sich in der Strömungsrichtung (12) des Druckmediums verringerndem Querschnitt gebildet sind.

8. Durchfluss-Messvorrichtung nach einem der Ansprüche 1 bis 7, **dadurch gekennzeichnet, dass** mindestens ein Abgriffskanal (18) mehrere auf gleicher axialer Höhe in Umfangsrichtung über den Kanalumfang verteilte Abgriffsmündungen (22) aufweist, die gemeinsam mit einer am Außenumfang des Kanaleinsatzes (4) ausgebildeten Ringnut (24) kommunizieren.

9. Durchfluss-Messvorrichtung nach einem der Ansprüche 1 bis 8, **dadurch gekennzeichnet, dass** der Kanaleinsatz (4) wahlweise mit einer von zwei entgegengesetzten Längsausrichtungen in die Aufnahme (3) einsetzbar ist, um bei beiden Strömungsrichtungen des Druckmediums eine Durchflussmessung zu ermöglichen.

10. Durchfluss-Messvorrichtung nach Anspruch 9, **dadurch gekennzeichnet, dass** der Kanaleinsatz (4) von entgegengesetzten Stirnseiten her in die Aufnahme (3) einsetzbar ist.

11. Durchfluss-Messvorrichtung nach Anspruch 9 oder 10, **dadurch gekennzeichnet, dass** in der Wandung (21) des Kanaleinsatzes (4) zwei einsatzseitige Kanalabschnitte (23a, 23b) verlaufen, die an axial beabstandeten Stellen in den Haupt-Strömungskanal (6) einmünden und die jeweils mit einer am Außenumfang des Kanaleinsatzes (4) ausgebildeten Ringnut (34) kommunizieren, und dass drei gehäuseseitige Kanalabschnitte (24a, 24b, 24c) der Abgriffskanäle (18) jeweils zum einen mit der Durchfluss-Erfassungseinrichtung (14) kommunizieren und zum anderen an axial beabstandeten Stellen in die Aufnahme (3) einmünden, wobei die beiderseitigen Schnittstellen so ausgeführt sind, dass ein erster (23a) der einsatzseitigen Kanalabschnitte unabhängig von der Längsausrichtung des Kanaleinsatzes (4) mit einem ersten (24a) gehäuseseitigen Kanalabschnitt kommuniziert, während der zweite einsatzseitige Kanalabschnitt (23b) je nach Längsausrichtung des Kanaleinsatzes (4) mit dem zweiten (24b) oder dem dritten (24c) gehäuseseitigen Kanalabschnitt kommuniziert.

12. Durchfluss-Messvorrichtung nach Anspruch 11, **dadurch gekennzeichnet, dass** der Kanaleinsatz (4) am Außenumfang Dichtmittel (44) aufweist, die durch Zusammenwirken mit dem Innenumfang der Aufnahme (3) den momentan nicht mit einem einsatzseitigen Kanalabschnitt kommunizierenden zweiten oder dritten gehäuseseitigen Kanalabschnitt (24b, 24c) dicht absperren.

13. Durchfluss-Messvorrichtung nach Anspruch 11 oder 12, **dadurch gekennzeichnet, dass** die Ringnuten (34) axial beidseits jeweils von einem den Kanaleinsatz (4) konzentrisch umschließenden Dichtring (42) flankiert sind.

14. Durchfluss-Messvorrichtung nach Anspruch 13, **dadurch gekennzeichnet, dass** die einsatzseitigen Kanalabschnitte (23) wenigstens teilweise jeweils zwei am Außenumfang des Kanaleinsatzes (4) vorgesehene Anschlussöffnungen (25) aufweisen, die derart an unterschiedlichen Stellen platziert sind, dass ein und derselbe gehäuseseitige Kanalabschnitt (24) entsprechend der Längsausrichtung des Kanaleinsatzes (4) entweder mit der einen oder mit der anderen Anschlussöffnung (25) kommuniziert.

15. Durchfluss-Messvorrichtung nach Anspruch 14, **dadurch gekennzeichnet, dass** eine der beiden Anschlussöffnungen mit der zugeordneten Abgriffsmündung (22) radial fluchtet.

16. Durchfluss-Messvorrichtung nach Anspruch 14 oder 15, **dadurch gekennzeichnet, dass** die beiden Anschlussöffnungen (25) durch einen am Außenumfang des Kanaleinsatzes (4) ausgebildeten nutartigen Verbindungskanal (45) miteinander verbunden sind.

17. Durchfluss-Messvorrichtung nach Anspruch 16, **dadurch gekennzeichnet, dass** jeder nutartige Verbindungskanal (45) von einer am Kanaleinsatz (4) fixierten Dichtung (46) umschlossen ist.

18. Durchfluss-Messvorrichtung nach einem der Ansprüche 1 bis 17, **gekennzeichnet durch** eine Ausgestaltung als Bestandteil eines Druckluft-Wartungsgerätes oder eines anderen fluidtechnischen Gerätes.

19. Durchfluss-Messvorrichtung nach einem der Ansprüche 1 bis 18, **gekennzeichnet durch** mehrere alternativ in die Aufnahme (3) einsetzbare Kanaleinsätze (4) mit unterschiedlicher Spezifikation.

20. Durchfluss-Messvorrichtung nach Anspruch 19, **dadurch gekennzeichnet, dass** die unterschiedlichen Kanaleinsätze (4) durch Farbcodierungen oder sonstige Unterscheidungsmittel individualisiert sind.
